# EUROPÄISCHE PATENTSCHRIFT

(11) **EP 2 895 999 B1**
(45) Veröffentlichungstag und Bekanntmachung des Hinweises auf die Patenterteilung: **23.08.2023**
(21) Anmeldenummer: 13759763.9
(22) Anmeldetag: 11.09.2013
(51) Int. Cl.: G06Q 20/04, G06Q 90/00, G07F 7/02

(54) **VERFAHREN ZUR PRÜFUNG EINZELNER ZAHLUNGSBELEGE UND HANDELSRECHNUNGEN**
METHOD FOR AUDITING OF INDIVIDUAL PAYMENT RECEIPTS
PROCÉDÉ DE VÉRIFICATION DES RECETTES DE PAIEMENT INDIVIDUELLES

(30) Priorität: 13.09.2012 AT 10052012
(43) Veröffentlichungstag der Anmeldung: 22.07.2015
(73) Patentinhaber: EFSTA IT Services GmbH, 4407 Steyr-Gleink (AT)
(72) Erfinder: MATEV, Anton, 4522 Wartberg a.d. Krems (AT); VEIGEL, Jörg, 4400 Steyr (AT)
(74) Vertreter: KLIMENT & HENHAPEL
(86) Internationale Anmeldenummer: PCT/EP2013/068814
(87) Internationale Veröffentlichungsnummer: WO 2014/041021

(56) Entgegenhaltungen:
- EP-A1- 1 758 053
- US-A1- 2004 032 083
- US-A1- 2004 107 170
- US-A1- 2005 273 440
- US-A1- 2006 237 528
- US-A1- 2007 083 449
- US-A1- 2008 313 062
- US-A1- 2009 006 151
- US-A1- 2009 204 530

## Beschreibung

Die Erfindung betrifft ein Verfahren zur Speicherung und Prüfung von Daten über Transaktionen, bei denen an einer Verkaufsstelle eines Handelsunternehmens für den Erhalt einer Ware oder Dienstleistung ein Kaufpreis entrichtet und ein Zahlungsbeleg übergeben wird, gemäß dem Oberbegriff von Anspruch 1.

Der Zahlungsbeleg kann dabei an der Verkaufsstelle durch einen Belegsdrucker ausgedruckt und dem Kunden in Papierform übergeben werden, oder der Kunde erhält einen Zahlungsbeleg in elektronischer Form. Für das Handelsunternehmen ist die Transaktion in weiterer Folge in der Buchführung zu erfassen, wobei die Buchung dieser Transaktion auf eine Weise erfolgen muss, die nicht nur einer unternehmensinternen Revision zur Verfügung steht, sondern auch einer externen Prüfung durch einen Wirtschaftsprüfer, Steuerberater oder durch Finanzbehörden. Da eine solche Prüfung nur anhand der Zahlungsbelege erfolgen kann, muss sich der Prüfer zumeist in die Räumlichkeiten des Handelsunternehmens begeben, um dort Einsicht in die Zahlungsbelege zu üben. Das ist in der Regel auch dann notwendig, wenn die Zahlungsbelege elektronisch erfasst sind, da Buchhaltungsdaten vertrauliche Informationen darstellen, auf die von außerhalb des Handelsunternehmens in der Regel nicht zugegriffen werden kann. Des Weiteren liegt die korrekte Erfassung von Zahlungsbelegen auch im Interesse des Handelsunternehmens, einerseits um eine korrekte Buchhaltung zu gewährleisten, und andererseits um Manipulationen durch Mitarbeiter feststellen zu können.

In herkömmlicher Weise ist eine Prüfung der korrekten Buchung einzelner Zahlungsbelege kaum möglich. Oftmals verfügen Verkaufsstellen nicht über die technischen Voraussetzungen zur elektronischen Erfassung und Verbuchung einzelner Zahlungsbelege, sodass einzelne Zahlungsbelege mitunter nicht von der Buchführung erfasst werden. Falls solche technischen Voraussetzungen gegeben sind, etwa indem eine Kassa einer Verkaufsstelle über eine Datenleitung mit einem zentralen Server verbunden ist, der einzelne Transaktionen erfasst und einer zentralen Buchführung zuführt, fehlen Einrichtungen, die die Datenerfassung und -übertcagung manipulationssicher gestalten. Die US 2005/0273440 A1 beschreibt ein Verfahren zum verschlüsselten Austausch von Daten im Zuge elektronischer Transaktionen zwischen Käufer und Verkäufer, bietet jedoch keine Möglichkeiten im Falle einer Ausgabe physischer Zahlungsbelege an einer Verkaufsstelle. Zudem hat das Handelsunternehmen in seiner Erfassung und Verarbeitung von Transaktionsdaten auch gesetzliche Vorgaben zu erfüllen, die zunehmend strenger werden. Ein gattungsgemäßes Verfahren wurde in der US 2004/107170 A1 beschrieben. Weitere Verfahren wurden in den Druckschriften EP 1 758 053 A1, TW 200 907 787 A, US 2006/237528 A1, US 2004/032083 A1, US 2009/006151 A1 und US 2008/313062 A1 beschrieben.

Es ist daher das Ziel der Erfindung ein Verfahren zur Speicherung und Prüfung von Daten über Verkaufsvorgänge bereitzustellen, das nicht nur eine korrekte Verbuchung einzelner Zahlungsbelege sicherstellt, sondern auch die Prüfbarkeit dieser Verbuchung für externe Prüfstellen, aber auch für den Kunden selbst, um betrügerische Aktivitäten feststellen und unterbinden zu können. Des Weiteren soll das Verfahren die Prüfung einer Buchführung, die zumindest teilweise auf der korrekten Verbuchung von Zahlungsbelegen beruht, durch unternehmensexterne Prüforgane erleichtern. Das Verfahren soll dabei einfach und wartungsarm, aber dennoch manipulationssicher sein.

Diese Ziele werden durch die Merkmale von Anspruch 1 erreicht. Anspruch 1 bezieht sich auf ein Verfahren zur Speicherung und Prüfung von Daten über Transaktionen, bei denen an einer Verkaufsstelle eines Handelsunternehmens für den Erhalt einer Ware oder Dienstleistung ein Kaufpreis entrichtet und ein Zahlungsbeleg übergeben wird, und an der Verkaufsstelle Daten zumindest über Ort, Zeit und Kaufpreis einer Transaktion von der Verkaufsstelle an eine, an der Verkaufsstelle angeordneten Registrierungs- und Sendeeinheit übermittelt werden, die anhand einer, von einer externen Registrierungsstelle vergebenen, die Registrierungs- und Sendeeinheit identifizierenden Verschlüsselungsvorschrift ein verschlüsseltes Transaktionsprotokoll erstellt, wobei das Transaktionsprotokoll die Daten über Ort, Zeit und Kaufpreis der Transaktion, sowie eine eindeutige Identifikationsnummer enthaltend eine Registrierungsnummer für die Registrierungs- und Sendeeinheit und eine Transaktionsnummer für die Transaktion enthält, und die Registrierungs- und Sendeeinheit das Transaktionsprotokoll an einen öffentlich unzugänglichen Datenspeicher sendet, der von einer Prüfstelle mithilfe einer, von der Registrierungsstelle vorgegebenen und dem Handelsunternehmen vergebenen Entschlüsselungsvorschrift zum Abruf des Transaktionsprotokolls zugänglich ist, wobei die Registrierungs- und Sendeeinheit die Identifikationsnummer an einen Zahlungsbelegsdrucker oder eine Stempelvorrichtung der Verkaufsstelle zur Ausgabe am Zahlungsbeleg sendet. Erfindungsgemäß wird hierbei vorgeschlagen, dass die Registrierungs- und Sendeeinheit anhand der, von der externen Registrierungsstelle vergebenen, die Registrierungs- und Sendeeinheit identifizierenden Verschlüsselungsvorschrift zusätzlich zum verschlüsselten Transaktionsprotokoll ein verschlüsseltes Betriebsprotokoll erstellt, das Betriebsdaten der Registrierungs- und Sendeeinheit enthält, anhand derer der ordnungsgemäße Betrieb der Registrierungs- und Sendeeinheit zur Feststellung von Manipulationsversuchen an der Registrierungs- und Sendeeinheit überprüfbar ist, und die Registrierungs- und Sendeeinheit das Betriebsprotokoll zusätzlich zum verschlüsselten Transaktionsprotokoll an den öffentlich unzugänglichen Datenspeicher sendet, der von der Prüfstelle mithilfe einer, von der Registrierungsstelle vorgegebenen und dem Handelsunternehmen vergebenen Entschlüsselungsvorschrift zum Abruf des Betriebsprotokolls zugänglich ist, und die Registrierungs- und Sendeeinheit die Identifikationsnummer in einer mithilfe des Kaufpreises verschlüsselten Form an einen, mittels Eingabe eines Zugangscodes öffentlich zugänglichen Datenspeicher sendet, wobei die am Zahlungsbeleg ausgegebene Identifikationsnummer gemeinsam mit dem Kaufpreis den Zugangscode darstellt.

Die Registrierungs- und Sendeeinheit ist unmittelbar an der Verkaufsstelle angeordnet, was insbesondere dann von Bedeutung ist, wenn ein Handelsunternehmen über mehrere, örtlich voneinander getrennte Verkaufsstellen verfügt. Die Registrierungs- und Sendeeinheit wird in der Praxis von einer Registrierungsstelle, also einer vom Handelsunternehmen unabhängigen Firma oder Behörde, an der Verkaufsstelle installiert und in Betrieb genommen, sodass die korrekte örtliche Zuordnung der Registrierungs- und Sendeeinheit gesichert ist. Die Registrierungs- und Sendeeinheit erhält die Daten über jede einzelne Transaktion, indem sie an der Verkaufsstelle etwa mit einer Kassa verbunden ist. Diese Daten werden in weiterer Folge an einen, außerhalb der Verkaufsstelle liegenden Ort übermittelt, wobei diese Datenübertragung anhand einer von der externen Registrierungsstelle vergebenen Verschlüsselungsvorschrift erfolgt, die auch die Registrierungs- und Sendeeinheit identifiziert. Diese Identifizierung wird dadurch bewerkstelligt, dass die Daten anhand eines Transaktionsprotokolls übermittelt werden, das nicht nur Daten über Ort, Zeit und Kaufpreis der Transaktion enthält, sondern auch eine eindeutige Identifikationsnummer enthaltend eine Registrierungsnummer für die Registrierungs- und Sendeeinheit und eine Transaktionsnummer für die Transaktion. Die Registrierungsnummer, die letztendlich die Registrierungs- und Sendeeinheit und somit den Absender der Daten identifiziert, wird somit über die Verschlüsselungsvorschrift von der externen Registrierungsstelle vergeben, und ist für Dritte somit nicht nachvollziehbar. Ebenso wird für jede Transaktion anhand der Verschlüsselungsvorschrift eine eindeutige Transaktionsnummer vergeben. Dieser Aufbau der Identifikationsnummer erleichtert ihre eindeutige Vergabe für jede Transaktion erheblich, da sie auf Basis einer, die einzelne Registrierungs- und Sendeeinheit identifizierenden Kennnummer gebildet wird, und somit jede einzelne, dezentrale Registrierungs- und Sendeinheit autonom Identifikationsnummern bilden und vergeben kann, deren Eindeutigkeit gesichert ist, ohne dass eine zentrale Registrierungsstelle Identifikationsnummern vergeben müsste. Die Registrierungsstelle vergibt lediglich die entsprechende Verschlüsselungsvorschrift hierzu. Die Identifikationsnummer stellt somit eine eindeutige Kennung für jede Transaktion dar, unter der zumindest Ort, Zeitpunkt und Kaufpreis der Transaktion abrufbar sind.

Abgesehen vom Transaktionsprotokoll ist jedoch erfindungsgemäß auch die Erstellung eines Betriebsprotokolls vorgesehen, das Betriebsdaten der Registrierungs- und Sendeeinheit enthält. Anhand der Betriebsdaten kann der ordnungsgemäße Betrieb der Registrierungs- und Sendeeinheit überprüft werden, um allfällige Manipulationsversuche an der Registrierungs- und Sendeeinheit feststellen zu können, wie im Folgenden noch näher ausgeführt wird.

Der Empfänger der Transaktionsdaten ist ein öffentlich unzugänglicher Datenspeicher, der aber von einer Prüfstelle mithilfe einer von der Registrierungsstelle vorgegebenen und dem Handelsunternehmen vergebenen Entschlüsselungsvorschrift zum Abruf des Transaktionsprotokolls und des Betriebsprotokolls zugänglich ist. Die Daten sind somit für Prüfstellen, die vom Handelsunternehmen entsprechend authorisiert wurden, anhand der manipulationssicheren Entschlüsselungsvorschrift der Registrierungsstelle lesbar. Das Prüforgan muss sich somit nicht mehr an eine Örtlichkeit des Handelsunternehmens begeben, sondern kann von jedem beliebigen Ort auf die buchhalterisch relevanten Daten nach entsprechender Authorisierung durch das Handelsunternehmen, aber nach Maßgabe einer unabhängigen Entschlüsselungsvorschrift, die auch Manipulationen des Handelsunternehmens selber ausschließt, zugreifen. Dabei kann mithilfe der Identifikationsnummer jeder einzelne Zahlungsbeleg überprüft werden.

Um bei einem solchen Verfahren Stichproben für einzelne Zahlungsbelege zu ermöglichen, sendet die Registrierungs- und Sendeeinheit die Identifikationsnummer an einen Zahlungsbelegsdrucker oder eine Stempelvorrichtung der Verkaufsstelle zur Ausgabe am Zahlungsbeleg, und erfindungsgemäß in einer, mithilfe des Kaufpreises verschlüsselten Form an einen, mittels Eingabe eines Zugangscodes öffentlich zugänglichen Datenspeicher, wobei die am Zahlungsbeleg ausgegebene Identifikationsnummer gemeinsam mit dem Kaufpreis den Zugangscode darstellt. Somit ist anhand eines konkreten Zahlungsbeleges überprüfbar, ob er von der Buchführung erfasst wurde. Die geforderte Bekanntgabe des Kaufpreises erhöht dabei die Zugangssicherheit. Die Auskunft kann dabei in Form einer einfachen "JA/NEIN"-Antwort erfolgen, etwa in Form einer farblichen "grün/rot"-Kodierung.

Der Datenspeicher ist somit insofern öffentlich zugänglich, als der Kunde mittels Eingabe eines Zugangscodes auf den Datenspeicher zugreifen kann, wobei die am Zahlungsbeleg ausgegebene Identifikationsnummer gemeinsam mit dem Kaufpreis den Zugangscode darstellt und lediglich anhand des betreffenden Zahlungsbeleges überprüft werden kann, ob er von der Buchführung des Handelsunternehmens erfasst wurde. Die geforderte Bekanntgabe des Kaufpreises erhöht dabei die Zugangssicherheit.

Um die Sicherheit des Verfahrens gegenüber unbefugten Manipulationsversuchen zu erhöhen wird vorzugsweise vorgeschlagen, dass die Registrierungs- und Sendeeinheit vor jeder Schreiboperation auf die Festplatte der Registrierungs- und Sendeeinheit die aktuelle Schreibposition auf die Festplatte mit der, bei der vorangegangenen Schreiboperation der Registrierungs- und Sendeeinheit angewählten Schreibposition vergleicht und eine unterschiedliche Schreibposition im Betriebsprotokoll speichert. Somit wird vor jeder Schreiboperation auf die Festplatte geprüft, ob etwa die aktuelle Schreibposition noch stimmt, oder der aktuelle Block die richtigen, zuletzt geschriebenen Daten enthält. Falls dies nicht der Fall ist, wurde offenbar auf die Festplatte der Registrierungs- und Sendeeinheit zugegriffen, und der detektierte Sachverhalt wird von der Registrierungs- und Sendeeinheit im Betriebsprotokoll vermerkt. Da der Prüfstelle auch das Betriebsprotokoll zur Verfügung steht, kann dieser Sachverhalt somit erkannt und geklärt werden.

Eine weitere Möglichkeit der Manipulationssicherheit besteht darin, dass die Registrierungs- und Sendeeinheit den Verlauf der Uhrzeitangabe mit den CPU-Ticks seiner Prozessoreinheit vergleicht und Abweichungen im Betriebsprotokoll speichert. Diese Abweichungen könnten nämlich ein Hinweis darauf sein, dass die Uhrzeitangabe verstellt wurde, etwa um andere Transaktionszeiten vorzutäuschen.

Des Weiteren wird zur Erhöhung der Manipulationssicherheit vorgeschlagen, dass die Registrierungs- und Sendeeinheit ihre Einschaltdauer, sowie die Betriebszeit des Registers ihrer Festplatte bei jedem Einschaltvorgang der Registrierungs- und Sendeeinheit miteinander vergleicht, und Abweichungen im Betriebsprotokoll speichert. Eine solche Abweichung könnte nämlich bedeuten, dass bei ausgeschalteter Registrierungs- und Sendeeinheit auf die Festplatte zugegriffen wurde, etwa um die Festplatte zu klonen oder auf andere Weise zu manipulieren.

Des Weiteren kann vorgesehen sein, dass die Registrierungs- und Sendeeinheit, sowie der öffentlich unzugängliche Datenspeicher Unterbrechungen der Datenverbindung der Registrierungs- und Sendeeinheit mit dem öffentlich unzugänglichen Datenspeicher detektieren und im Betriebsprotokoll speichern. Falls die Datenverbindung entweder absichtlich oder auch unabsichtlich auf Seiten der Registrierungs- und Sendeeinheit getrennt wurde, wird dieses Ereignis im Betriebsprotokoll vermerkt, da ein Manipulationsversuch vorliegen könnte. Des Weiteren ist vorgesehen, dass auch der öffentlich unzugängliche Datenspeicher Unterbrechungen der Datenverbindung detektiert und im Betriebsprotokoll vermerkt, um durch diese Redundanz zusätzliche Sicherheit des erfindungsgemäßen Verfahrens zu erreichen.

Die Vergabe der eindeutigen Identifikationsnummer stellt einen wichtigen Schritt des erfindungsgemäßen Verfahrens dar. Es wäre denkbar, dass aufgrund von Hardware- oder Softwarefehler, aber auch aufgrund von Angriffen Dritter die Registrierungs- und Sendeeinheit zur ständigen Vergabe von Identifikationsnummern veranlasst wird. Wenngleich die Verschlüsselungsvorschrift für eine ausreichende Anzahl verfügbarer Identifikationsnummern pro Zeiteinheit Sorge trägt, wird aufgrund der endlichen Stellen der Identifikationsnummer die Anzahl der theoretischen Kombinationen stets begrenzt sein. Auf diese Weise könnte das erfindungsgemäße Verfahren außer Funktion gesetzt werden. Daher wird vorgeschlagen, dass für eine vorgegebene Zeiteinheit lediglich eine maximale Anzahl an Identifikationsnummern vergeben wird, wobei ein Schwellenwert unterhalb dieser maximalen Anzahl vorgesehen ist, bei dessen Überschreitung innerhalb der verbleibenden Zeiteinheit eine zeitlich verzögerte Vergabe neuer Identifikationsnummer erfolgt. Der Schwellenwert wird so bemessen sein, dass er bei üblichem Betrieb der Registrierungs- und Sendeeinheit nicht oder kaum erreicht wird, sodass zumeist eine unverzögerte Vergabe von Identifikationsnummern, also eine raschest mögliche Vergabe von Identifikationsnummern mit der apparativ zu bewerkstelligenden Maximalgeschwindigkeit, gewährleistet ist. Die Zeiteinheit ist etwa durch einen Kalendertag gegeben. Falls durch fehlerhafte Vorgänge oder mutwillige Eingriffe Dritter die Registrierungs- und Sendeeinheit zur ständigen Vergabe von Identifikationsnummern veranlasst wird, kann nun bei Überschreiten des Schwellenwertes vergebener Identifikationsnummern während der verbleibenden Zeiteinheit eine zeitlich verzögerte Vergabe neuer Identifikationsnummer erfolgen, wobei die Verzögerung so gestaltet werden kann, dass für die verbleibende Zeiteinheit mit Sicherheit Identifikationsnummern vergeben werden können, also etwa mit zunehmender Verzögerung.

Das erfindungsgemäße Verfahren mag dadurch zwar langsamer betreibbar sein, es wird aber nie funktionsunfähig werden.

Erfindungsgemäß wird ferner auch eine Registrierungs- und Sendeeinheit zur Durchführung des erfindungsgemäßen Verfahrens für elektronisch nicht erfasste Zahlungsbelege vorgeschlagen, bei der eine Eingabeeinheit zur Eingabe des Kaufpreises, sowie eine Stempelvorrichtung zur Ausgabe der Identifikationsnummer auf einem eingeführten Zahlungsbeleg vorgesehen sind. Auf diese Weise wird das erfindungsgemäße Verfahren auch für Verkaufsstellen anwendbar, die keine Kassa aufweisen, oder keine Kassa, die zur elektronischen Verarbeitung von Transaktionen geeignet wäre. Mithilfe einer solchen Registrierungs- und Sendeeinheit kann jeder handschriftliche Beleg dem erfindungsgemäßen Verfahren zugeführt werden, indem er in die Registrierungs- und Sendeeinheit eingelegt wird, und der Kaufpreis manuell über die Eingabeeinheit eingegeben wird. Die Registrierungs- und Sendeeinheit vergibt in weiterer Folge eine Identifikationsnummer und stempelt sie erfindungsgemäß über die Stemepelvorrichtung auf den Zahlungsbeleg auf.

Die Erfindung wird in weiterer Folge anhand eines Ausführungsbeispieles mithilfe der beiliegenden Zeichnungen näher erläutert. Es zeigen hierbei die
Fig. 1 eine schematische Darstellung zur Erläuterung der grundsätzlichen Systemtopologie der Datenbereitstellung im Rahmen des erfindungsgemäßen Verfahrens mithilfe der Registrierungs- und Sendeeinheiten,
Fig. 2 eine schematische Darstellung zur Erläuterung der Funktionsweise der Registrierungs- und Sendeeinheiten,
Fig. 3 eine schematische Darstellung zur Erläuterung der grundsätzlichen Systemtopologie des Gesamtsystems des erfindungsgemäßen Verfahrens, und die
Fig. 4 eine schematische Darstellung zur Erläuterung des Einzelnachweises von Transaktionen im Rahmen des erfindungsgemäßen Verfahrens.

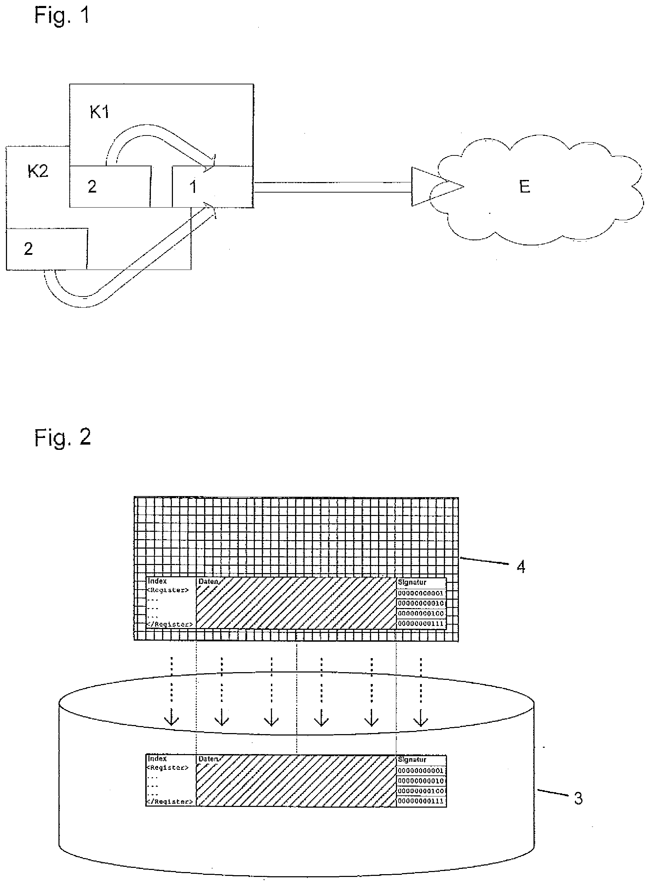

Zunächst wird Bezug auf die Fig. 1 genommen, die schematisch eine Verkaufsstelle mit mehreren Kassen Ki (i=1,2,3,...) zeigt, im gezeigten Beispiel zwei Kassen Kl, K2. Der Verkaufsstelle ist eine Registrierungs- und Sendeeinheit 1 zugeordnet, die mit den Kassen Kl, K2 jeweils über eine Schnittstelle 2 verbunden ist. Somit ist eine Registrierungs- und Sendeeinheit 1 vorgesehen, die unmittelbar an der Verkaufsstelle angeordnet ist, was insbesondere dann von Bedeutung ist, wenn ein Handelsunternehmen über mehrere, örtlich voneinander getrennte Verkaufsstellen verfügt. Die Registrierungs- und Sendeeinheit 1 identifiziert eindeutig eine bestimmte Verkaufsstelle mit einer oder mehreren Kassen Ki und ermöglicht eine tägliche Umsatzmeldung für jeden Öffnungstag der Verkaufsstelle, deren Abgleich mit den Finanzbuchhaltungskonten der betreffenden Verkaufsstelle leicht möglich ist. Zudem können an der betreffenden Verkaufsstelle leicht je nach Bedarf zusätzliche Kassen Ki in Betrieb genommen werden, die lediglich über eine Schnittstelle 2 mit der Registrierungs- und Sendeeinheit 1 zu verbinden sind. Eine Änderung der Konfigurierung der Registrierungs- und Sendeeinheit 1 ist hierbei jedoch nicht erforderlich, was den praktischen Einsatz der Registrierungs- und Sendeeinheiten 1 sehr erleichtert.

Im Rahmen einer Transaktion erwirbt der Kunde an der Verkaufsstelle eine Ware oder Dienstleistung und entrichtet hierfür einen Kaufpreis. Der Kaufpreis wird etwa elektronisch über Scanner und dergleichen erfasst, oder händisch in eine Kassa Ki eingegeben. Über die Schnittstelle 2, etwa eine API-Schnittstelle, wird der Datenübergang von der jeweiligen Kassensoftware zur Registrierungs- und Sendeeinheit 1 bewerkstelligt und der Kaufpreis an die Registrierungs- und Sendeeinheit 1 übergeben, wobei in der gezeigten Ausführungsform die Schnittstelle 2 vor allem eine passive Komponente ist.

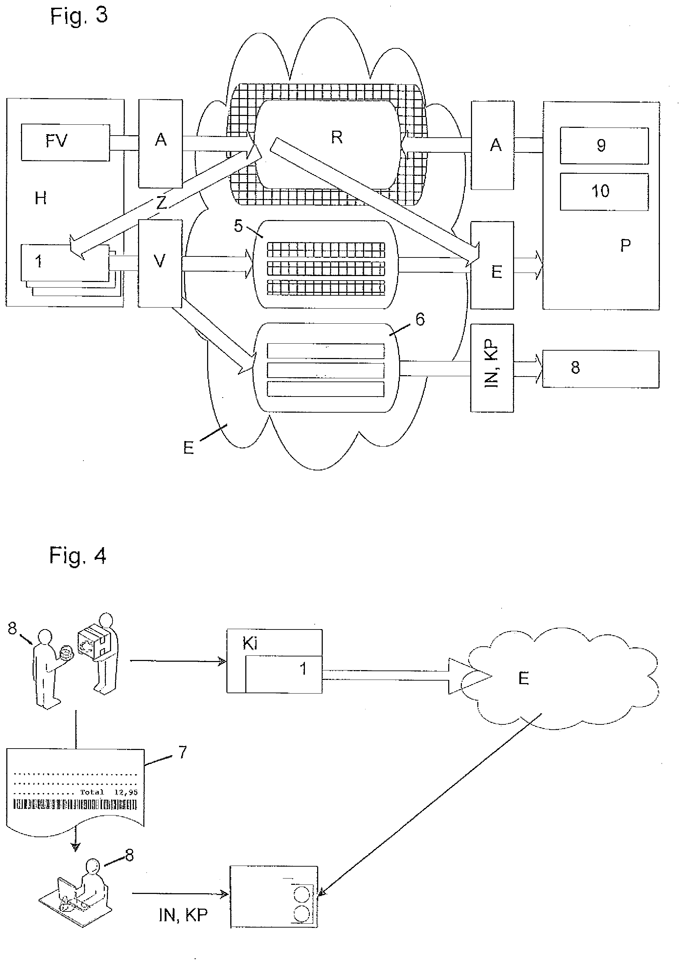

Die aktiven Funktionen wie etwa die Vergabe einer Identifikationsnummer, die Erstellung des Transaktions- und Betriebsprotokolls sowie die Datenübergabe an externe Bereiche außerhalb der Verkaufsstelle werden von der Registrierungs- und Sendeeinheit 1 ausgeübt. Die Registrierungs- und Sendeeinheit 1 wird in der Praxis von einer Registrierungsstelle R (siehe Fig. 3), also einer vom Handelsunternehmen unabhängigen Firma oder Behörde, an der Verkaufsstelle installiert und in Betrieb genommen. Hierzu wird eine Netzwerkverbindung von der Kassa Ki zur Registrierungs- und Sendeeinheit 1 hergestellt und die Software der Schnittstelle 2 an der Kassa Ki installiert, wobei der Kassa Ki einerseits eine eindeutige Kassakennung verliehen wird, und der Kassa Ki andererseits die Netzwerkadresse der Registrierungs- und Sendeeinheit 1 bekannt gegeben wird. Bei zukünftigen Datentransfers von der Kassa Ki zur Registrierungs- und Sendeeinheit 1 wird in der Regel auch die Kassakennung übergeben werden, um die jeweilige Kassa Ki zu identifizieren.

Bei der anfänglichen Konfiguration der Registrierungs- und Sendeeinheit 1 werden zunächst Daten eingegeben und gespeichert, die eine örtliche Zuordnung der Registrierungs- und Sendeeinheit 1 ermöglichen, also etwa Land, Postleitzahl, Adresse, Kontaktdaten der Verkaufsstelle und/oder des Verkaufs stellen verantwortlichen, sowie allfällig zusätzliche Informationen wie Öffnungszeiten der Verkaufsstelle. Mithilfe dieser Daten erstellt die Registrierungs- und Sendeeinheit 1 eine eindeutige Registrierungsnummer für die Registrierungs- und Sendeeinheit 1, die deren eindeutige Identifizierung ermöglicht. Ferner wird eine Datenverbindung zu einem externen Bereich E (siehe Fig. 3) hergestellt. Mit der ordnungsgemäßen Inbetriebnahme der Registrierungs- und Sendeeinheit 1 wird in weiterer Folge ein Zertifikat Z durch die Registrierungsstelle R vergeben, das an der Registrierungs- und Sendeeinheit 1 abgespeichert wird. Dieses Zertifikat Z beinhaltet insbesondere eine Verschlüsselungsvorschrift für Daten, die zukünftig von der Registrierungs- und Sendeeinheit 1 an externe Bereiche E übertragen werden. Diese Verschlüsselungsvorschrift ist dem Handelsunternehmen an sich aber nicht bekannt. Die Registrierungs- und Sendeeinheit 1 erstellt schließlich seine Registrierdatei, die insbesondere als Offline-Puffer dient und in weiterer Folge noch näher erläutert werden wird.

Die Registrierungs- und Sendeeinheit 1 arbeitet in weiterer Folge autonom, indem sie Identifikationsnummern für Transaktionen selbsttätig vergibt, die Datenintegrität und die lokale Uhrzeit überwacht, Betriebsvorgänge wie Systemstart, Programmstart oder Netzwerk-Fehler protokolliert, Transaktions- und Betriebsprotokolle selbsttätig erstellt und regelmäßige Datenverbindungen zu externen Stellen aufbaut und Datenübertragungen durchführt. Hierzu nimmt sie zunächst die Daten von den Kassen Ki über einzelne Transaktionen entgegen und speichert sie vorläufig ab. Beim Speichervorgang wird für die betreffende Transaktion eine eindeutige Identifikationsnummer IN vergeben, die sich aus der oben beschriebenen Registrierungsnummer, sowie einer Transaktionnummer zusammen setzt. Die letztgenannte Transaktionsnummer ist etwa eine Abfolge mehrerer Ziffern und Buchstaben, die gemäß vorgegebener Bildungsvorschriften generiert wird. Die Ausgabe einer Identifikationsnummer IN kann etwa so erfolgen, dass innerhalb einer vorgegebenen Zeiteinheit, etwa innerhalb eines Kalendertages, lediglich eine maximale Anzahl an Identifikationsnummern IN vergeben wird, wobei ein Schwellenwert unterhalb dieser maximalen Anzahl vorgesehen ist, bei dessen Überschreitung innerhalb der verbleibenden Zeiteinheit eine zeitlich verzögerte Vergabe neuer Identifikationsnummer IN erfolgt. Falls durch fehlerhafte Vorgänge oder mutwillige Eingriffe Dritter die Registrierungs- und Sendeeinheit 1 zur ständigen Vergabe von Identifikationsnummern IN veranlasst wird, kann somit das erfindungsgemäße Verfahren dennoch funktionsfähig gehalten werden.

Die Identifizierungsnummer IN für eine Transaktion wird in weiterer Folge der betreffenden Kassa Ki, an der die Transaktion stattgefunden hat, zur Ausgabe am Zahlungsbeleg 7 (siehe auch Fig. 4) rückübermittelt. Der betreffende Kunde verfügt somit über die Identifikationsnummer IN. Dieser Vorgang ist einfach zu bewerkstelligen, falls die betreffende Kassa Ki mit einem Zahlungsbelegsdrucker ausgestattet ist. Falls das nicht der Fall ist, oder falls überhaupt keine elektronische Kassa Ki vorgesehen ist, etwa in kleineren Betrieben wie z.B. im Gastgewerbe, kann die Registrierungs- und Sendeeinheit 1 auch eine Eingabeeinheit zur Eingabe des Kaufpreises umfassen, sowie eine Stempelvorrichtung zur Ausgabe der Identifikationsnummer IN auf einem eingeführten Zahlungsbeleg 7. Auf diese Weise wird das erfindungsgemäße Verfahren auch für Verkaufsstellen anwendbar, die keine Kassa Ki aufweisen, oder keine Kassa Ki, die zur elektronischen Verarbeitung von Transaktionen geeignet wäre. Mithilfe einer solchen Registrierungs- und Sendeeinheit 1 kann jeder handschriftliche Beleg dem erfindungsgemäßen Verfahren zugeführt werden, indem er in die Registrierungs- und Sendeeinheit 1 eingelegt wird, und der Kaufpreis manuell über die Eingabeeinheit eingegeben wird. Die Registrierungs- und Sendeeinheit 1 vergibt in weiterer Folge eine Identifikationsnummer IN wie oben beschrieben und stempelt sie über die Stempelvorrichtung auf den Zahlungsbeleg 7 auf.

Anhand der Fig. 2 wird im Folgenden die grundsätzliche Funktionsweise der Registrierungs- und Sendeeinheiten 1 erläutert, die eine Prozessoreinheit, eine Festplatte 3 als Speichermedium, sowie einen Programmspeicher 4 aufweist. Sie werden auch als "Sendeeinheiten" bezeichnet, weil sie die Übertragung von Daten in externe Bereiche E ermöglichen, wobei die Datenübertragung auch kabellos erfolgen könnte. Die Registrierungs- und Sendeeinheit 1 weist ferner ein Register mit einer lokalen Registrierdatei auf, wobei es sich beim Register um eine aktive Komponente handelt, die selbstständig Datenübertragungen in die externen Bereiche E vornimmt, die Dateiintegrität auch während des Programmbetriebes und die lokale Uhrzeit überwacht, sowie Ereignisse wie Systemstart, Programmstart oder Netzwerk-Fehler protokolliert. Die Registrierdatei besteht aus einem Index-, Daten- und Signaturteil, wobei der Indexteil insbesondere die Registernummer, das Initialisierungsdatum, lokale Referenzinformationen (HDD-Nummer, CPU-Nummer), sowie Informationen über die Kapazität der Registrierdatei, der aktuellen und der letzten Schreibposition, die letzte Meldung an die externen Bereiche E, sowie über das Zertifikat Z des Registers enthält. Der Datenteil enthält sequentiell Datensätze unterschiedlicher Länge und kann etwa als Ringspeicher genutzt werden. Der Signaturteil enthält etwa Block-Hashes und eine Signatur über diese.

Gemäß einer bevorzugten Ausführungsform wird zur Absicherung des Systems die Registrierdatei parallel im Programmspeicher 4 und auf der Festplatte 3, geführt. Zur weiteren Absicherung dienen eine Verschlüsselung der Transaktionsdaten in der Registrierdatei, sowie eine permanent geführte Signatur über die Daten der Registrierdatei. Beim Start des Registers werden verschiedene Parameter geprüft, etwa die in der Registrierdatei eingetragene CPU-Nummer oder die HDD-Seriennummer, um zu prüfen, ob die Registrierdatei zum aktuellen System passt. Des Weiteren kann überprüft werden, ob die Registrierdatei manipuliert wurde, indem vor jeder Schreiboperation auf die Festplatte 3 die aktuelle Schreibposition auf die Festplatte 3 mit der, bei der vorangegangenen Schreiboperation angewählten Schreibposition verglichen wird, oder ob er aktuelle Block die richtigen, zuletzt geschriebenen Daten enthält. Falls das nicht der Fall ist, wurde offensichtlich von außen in das System eingegriffen, wobei dieser Sachverhalt im Betriebsprotokoll vermerkt wird. Die korrekte Registrierdatei kann gegebenenfalls aus dem Programmspeicher wiederhergestellt werden. Des Weiteren wird beim Start des Registers die eigene Systemzeit mit der Uhrzeit im externen Bereich E verglichen, um allfällige Veränderungen der Systemzeit feststellen zu können. Zusätzlich kann bei laufendem Register die Uhrzeitangabe mit den CPU-Ticks der Prozessoreinheit verglichen werden und Abweichungen im Betriebsprotokoll vermerkt werden. Diese Abtweichungen könnten ebenfalls ein Hinweis darauf sein, dass die Uhrzeitangabe verstellt wurde, etwa um andere Transaktionszeiten vorzutäuschen.

Eine weitere Möglichkeit der Manipulationssicherheit besteht darin, dass die von der HDD gelesene Einschaltdauer mit der Betriebszeit des Registers bei jedem Einschaltvorgang der Registrierungs- und Sendeeinheit 1 miteinander verglichen werden, und Abweichungen im Betriebsprotokoll gespeichert werden. Eine solche Abweichung könnte nämlich bedeuten, dass das System ohne Register betrieben wurde, etwa um die Festplatte zu klonen oder auf andere Weise zu manipulieren.

Des Weiteren kann vorgesehen sein, dass Unterbrechungen der Datenverbindung zwischen der Registrierungs- und Sendeeinheit 1 und den externen Bereichen E gespeichert und im Betriebsprotokoll vermerkt werden.

Neben dem Betriebsprotokoll erstellt die Registrierdatei auch ein Transaktionsprotokoll, das neben den Daten über Ort, Zeit und Kaufpreis der Transaktion auch die Identifikationsnummer IN enthält, wobei die Identifikationsnummer IN wie oben beschrieben aus der Registrierungsnummer für die Registrierungs- und Sendeeinheit 1 und der Transaktionsnummer für die betreffende Transaktion gebildet wird.

Wie im Folgenden anhand der Fig. 3 erläutert werden soll, wird das Betriebs- und Transaktionsprotokoll in weiterer Folge an einen, außerhalb der Verkaufsstelle liegenden Ort übermittelt, wobei diese Datenübertragung anhand einer, von der externen Registrierungsstelle R vergebenen Verschlüsselungsvorschrift V erfolgt. Beim Empfänger handelt es sich erfindungsgemäß einerseits um einen öffentlich unzugänglichen Datenspeicher 5, sowie um einen öffentlich zugänglichen Datenspeicher 6. Auf den öffentlich unzugänglichen Datenspeicher 5 kann jedoch von einer Prüfstelle P mithilfe einer, von der Registrierungsstelle R vorgegebenen Entschlüsselungsvorschrift E zugegriffen werden, insbesondere zum Abruf des Transaktionsprotokolls und des Betriebsprotokolls. Die Daten sind somit für Prüfstellen P, die vom Handelsunternehmen entsprechend authorisiert wurden, anhand der manipulationssicheren Entschlüsselungsvorschrift E der Registrierungsstelle R lesbar. Das Prüforgan muss sich somit nicht mehr an eine Örtlichkeit des Handelsunternehmens begeben, sondern kann von jedem beliebigen Ort auf die buchhalterisch relevanten Daten nach entsprechender Authorisierung durch das Handelsunternehmen und nach Maßgabe einer unabhängigen Entschlüsselungsvorschrift E, die auch Manipulationen des Handelsunternehmens selber ausschließt, zugreifen. Dabei können mithilfe der Identifikationsnummer IN jeder einzelne Zahlungsbeleg 7, sowie mithilfe des Betriebsprotokolls Auffälligkeiten in der Datenerstellung und -verarbeitung überprüft werden.

Wie der Fig. 3 ferner entnommen werden kann, besteht zwischen dem Handelsunternehmen H, insbesondere einem Fiskalverantwortlichen FV des Handelsunternehmens H, und der Registrierungsstelle R, sowie zwischen der Registrierungsstelle R und der Prüfstelle P lediglich über eine anfängliche Authentifizierung A Kontakt. Die Registrierungsstelle R vergibt Zertifikate Z an die Registrierungs- und Sendeeinheiten 1 des Handeslunternehmens H, die in weiterer Folge autonom agieren und gemäß der, von der Registrierungsstelle R vorgegebenen Verschlüsselungsvorschrift V an die Datenspeicher 5, 6 berichten. Die Registrierungsstelle R verfügt weder über die Transaktionsdaten wie die Transaktions- und Betriebsprotokolle selbst, noch über einen Zugang auf diese Daten. Auf Anfrage des Handelsunternehmens H können jedoch Zugriffsberechtigungen für Prüfstellen P von der Registrierungsstelle R vergeben werden. Die Ausstellung dieser Zugriffsberechtigungen erfolgt gemeinsam mit der Bekanntgabe der Entschlüsselungsvorschrift E nach entsprechender Authentifizierung A der Prüfstelle P durch die Registrierungsstelle R. Die Zugriffsberechtigungen können freilich auch auf bestimmte Personen beschränkt werden, sowie auf den Abruf zeitlich begrenzter Transaktionsdaten, oder überhaupt nur für einen begrenzten Zeitraum vergeben werden. Die Zugriffsberechtigungen sind ferner auf bestimmte Register ausgestellt und enthalen zur Verschlüsselung deren Register-Key.

Im Folgenden wird auf die Fig. 4 Bezug genommen. Um Stichproben für einzelne Zahlungsbelege 7 zu ermöglichen wird erfindungsgemäß vorgeschlagen, dass die Registrierungs- und Sendeeinheit 1 die Identifikationsnummer IN an einen Zahlungsbelegsdrucker oder eine Stempelvorrichtung der Verkaufsstelle zur Ausgabe am Zahlungsbeleg 7 des Kunden 8 sendet, sowie in einer, mithilfe des Kaufpreises KP verschlüsselten Form an einen öffentlich zugänglichen Datenspeicher 6. Der Datenspeicher 6 ist insofern öffentlich zugänglich, als der Kunde 8 mittels Eingabe eines Zugangscodes auf den Datenspeicher 6 zugreifen kann (siehe auch Fig. 3), wobei die am Zahlungsbeleg 7 ausgegebene Identifikationsnummer IN gemeinsam mit dem Kaufpreis KP den Zugangscode darstellt und lediglich anhand des betreffenden Zahlungsbeleges 7 überprüft werden kann, ob er von der Buchführung des Handelsunternehmens H erfasst wurde. Die geforderte Bekanntgabe des Kaufpreises KP erhöht dabei die Zugangssicherheit. Die Auskunft kann dabei in Form einer einfachen "JA/NEIN"-Antwort erfolgen, etwa in Form einer farblichen " grün/rot" -Kodierung.

Das beschriebene Verfahren erleichtert es der Prüfstelle P, etwa einem Wirtschaftsprüfer 9, gegenüber einer Finanzbehörde 10 die formale Richtigkeit der Umsatzmeldungen zu bescheinigen, da diese formale Richtigkeit aufgrund des gegenständlichen Verfahrens sicher gestellt ist. Bei einer Kassaführung in der herkömmlichen Form kann diese Bescheinigung nur durch manuelle Detailprüfung vorgenommen werden, was deutlich aufwändiger ist und mit großen Haftungsrisiken des Wirtschaftsprüfers verbunden ist. Für das Handelsunternehmen H ergeben sich dadurch Kostenvorteile, des Weiteren kann die gesetzlich vorgeschriebene Aufbewahrungsfrist für Buchhaltungsdaten vom öffentlich unzugänglichen Datenspeicher 5 ohne zusätzlichen Aufwand für das Handelsunternehmen H leicht eingehalten werden.

## Patentansprüche

1. Verfahren zur Speicherung und Prüfung von Daten über Transaktionen, bei denen an einer Verkaufsstelle eines Handelsunternehmens (H) für den Erhalt einer Ware oder Dienstleistung ein Kaufpreis (KP) entrichtet und ein Zahlungsbeleg (7) übergeben wird, und an der Verkaufsstelle Daten zumindest über Ort, Zeit und Kaufpreis einer Transaktion von der Verkaufsstelle an eine, an der Verkaufsstelle angeordneten Registrierungs- und Sendeeinheit (1) übermittelt werden, die anhand einer, von einer externen Registrierungsstelle (R) vergebenen, die Registrierungs- und Sendeeinheit (1) identifizierenden Verschlüsselungsvorschrift (V) ein verschlüsseltes Transaktionsprotokoll erstellt, wobei das Transaktionsprotokoll die Daten über Ort, Zeit und Kaufpreis der Transaktion, sowie eine eindeutige Identifikationsnummer (IN) enthaltend eine Registrierungsnummer für die Registrierungs- und Sendeeinheit (1) und eine Transaktionsnummer für die Transaktion enthält, und die Registrierungs- und Sendeeinheit (1) das Transaktionsprotokoll an einen öffentlich unzugänglichen Datenspeicher (5) sendet, der von einer Prüfstelle (P) mithilfe einer, von der Registrierungsstelle (R) vorgegebenen und dem Handelsunternehmen (H) vergebenen Entschlüsselungsvorschrift (E) zum Abruf des Transaktionsprotokolls zugänglich ist, wobei die Registrierungs- und Sendeeinheit (1) die Identifikationsnummer (IN) an einen Zahlungsbelegsdrucker oder eine Stempelvorrichtung der Verkaufsstelle zur Ausgabe am Zahlungsbeleg (7) sendet, **dadurch gekennzeichnet, dass** die Registrierungs- und Sendeeinheit (1) anhand der, von der externen Registrierungsstelle (R) vergebenen, die Registrierungs- und Sendeeinheit (1) identifizierenden Verschlüsselungsvorschrift (V) zusätzlich zum verschlüsselten Transaktionsprotokoll ein verschlüsseltes Betriebsprotokoll erstellt, das Betriebsdaten der Registrierungs- und Sendeeinheit (1) enthält, anhand derer der ordnungsgemäße Betrieb der Registrierungs- und Sendeeinheit (1) zur Feststellung von Manipulationsversuchen an der Registrierungs- und Sendeeinheit (1) überprüfbar ist, und die Registrierungs- und Sendeeinheit (1) das Betriebsprotokoll zusätzlich zum verschlüsselten Transaktionsprotokoll an den öffentlich unzugänglichen Datenspeicher (5) sendet, der von der Prüfstelle (P) mithilfe einer, von der Registrierungsstelle (R) vorgegebenen und dem Handelsunternehmen (H) vergebenen Entschlüsselungsvorschrift (E) zum Abruf des Betriebsprotokolls zugänglich ist, und die Registrierungs- und Sendeeinheit (1) die Identifikationsnummer (IN) in einer mithilfe des Kaufpreises (KP) verschlüsselten Form an einen, mittels Eingabe eines Zugangscodes öffentlich zugänglichen Datenspeicher (6) sendet, wobei die am Zahlungsbeleg (7) ausgegebene Identifikationsnummer (IN) gemeinsam mit dem Kaufpreis (KP) den Zugangscode darstellt.

2. Verfahren nach Anspruch 1, **dadurch gekennzeichnet, dass** die Registrierungs- und Sendeeinheit (1) vor jeder Schreiboperation auf die Festplatte (3) der Registrierungs- und Sendeeinheit (1) die aktuelle Schreibposition auf die Festplatte (3) mit der, bei der vorangegangenen Schreiboperation der Registrierungs- und Sendeeinheit (1) angewählten Schreibposition vergleicht und eine unterschiedliche Schreibposition im Betriebsprotokoll speichert

3. Verfahren nach Anspruch 1 oder 2, **dadurch gekennzeichnet, dass** die Registrierungs- und Sendeeinheit (1) den Verlauf der Uhrzeitangabe mit den CPU-Ticks seiner Prozessoreinheit vergleicht und Abweichungen im Betriebsprotokoll speichert.

4. Verfahren nach einem der Ansprüche 1 bis 3, **dadurch gekennzeichnet, dass** die Registrierungs- und Sendeeinheit (1) ihre Einschaltdauer, sowie die Betriebszeit des Registers ihrer Festplatte (3) bei jedem Einschaltvorgang der Registrierungs- und Sendeeinheit (1) miteinander vergleicht, und Abweichungen im Betriebsprotokoll speichert.

5. Verfahren nach einem der Ansprüche 1 bis 4, **dadurch gekennzeichnet, dass** die Registrierungs- und Sendeeinheit (1), sowie der öffentlich unzugängliche Datenspeicher (5) Unterbrechungen der Datenverbindung der Registrierungs- und Sendeeinheit (1) mit dem öffentlich unzugänglichen Datenspeicher (5) detektieren und im Betriebsprotokoll speichern.

6. Verfahren nach einem der Ansprüche 1 bis 5, **dadurch gekennzeichnet, dass** für eine vorgegebene Zeiteinheit lediglich eine maximale Anzahl an Identifikationsnummern (IN) vergeben wird, wobei ein Schwellenwert unterhalb dieser maximalen Anzahl vorgesehen ist, bei dessen Überschreitung innerhalb der verbleibenden Zeiteinheit eine zeitlich verzögerte Vergabe neuer Identifikationsnummer (IN) erfolgt.

7. Registrierungs- und Sendeeinheit (1) konfiguriert für die Durchführung des Verfahren nach einem der Ansprüche 1 bis 6 für elektronisch nicht erfasste Zahlungsbelege (7), **dadurch gekennzeichnet, dass** eine Eingabeeinheit zur Eingabe des Kaufpreises (KP), sowie eine Stempelvorrichtung zur Ausgabe der Identifikationsnummer (IN) auf einem eingeführten Zahlungsbeleg (7) vorgesehen sind.

## Claims

1. Method for storing and checking data on transactions in which a purchase price (KP) is paid at a point of sale of a commercial enterprise (H) for the receipt of a good or service and a payment document (7) is handed over, and at the point of sale data at least on the place, time and purchase price of a transaction are transmitted from the point of sale to a registration and transmitting unit (1) arranged at the point of sale, which registration and transmitting unit (1) generates an encrypted transaction log on the basis of an encryption rule (V) assigned by an external registration unit (R) and identifying the registration and transmitting unit (1), wherein the transaction log contains the data on the place, time and purchase price of the transaction, as well as a unique identification number (IN) containing a registration number for the registration and transmitting unit (1) and a transaction number for the transaction, and the registration and transmitting unit (1) sends the transaction log to a publicly inaccessible data memory (5), which is checked by a checking station (P) by means of a decryption rule (E) specified by the registration unit (R) and assigned to the commercial enterprise (H) for retrieving the transaction log, wherein the registration and transmitting unit (1) transmits the identification number (IN) to a payment document printer or a stamping device of the point of sale for output on the payment document (7), **characterized in that** the registration and transmitting unit (1), on the basis of the encryption rule (V) which identifies the registration and transmitting unit (1) and is assigned by the external registration unit (R), generates, in addition to the encrypted transaction log, an encrypted operating log which contains operating data of the registration and transmitting unit (1) and on the basis of which the proper operation of the registration and transmitting unit (1) can be checked in order to detect attempts to tamper with the registration and transmitting unit (1), and the registration and transmitting unit (1) sends the operating log, in addition to the encrypted transaction log, to the publicly inaccessible data memory (5), which is accessible by the checking station (P) with the aid of a decryption rule (E) specified by the registration unit (R) and assigned to the commercial enterprise (H), for retrieving the operating log, and the registration and transmitting unit (1) transmits the identification number (IN) in a form encrypted with the aid of the purchase price (KP) to a data memory (6) which is publicly accessible by means of inputting an access code, wherein the identification number (IN) issued on the payment document (7) together with the purchase price (KP) represents the access code.

2. Method according to claim 1, **characterized in that** the registration and transmitting unit (1), before each write operation to the hard disk (3) of the registration and transmitting unit (1), compares the current write position to the hard disk (3) with the write position selected during the previous write operation of the registration and transmitting unit (1) and stores a different write position in the operating log.

3. Method according to claim 1 or 2, **characterized in that** the registration and transmitting unit (1) compares the course of the time indication with the CPU ticks of its processor unit and stores deviations in the operation log.

4. Method according to one of claims 1 to 3, **characterized in that** the registration and transmitting unit (1) compares its switch-on time, as well as the operating time of the register of its hard disk (3) with each other during each switch-on operation of the registration and transmitting unit (1), and stores deviations in the operating log.

5. Method according to one of claims 1 to 4, **characterized in that** the registration and transmitting unit (1) as well as the publicly inaccessible data memory (5) detect interruptions of the data connection of the registration and transmitting unit (1) with the publicly inaccessible data memory (5) and store them in the operating log.

6. Method according to one of claims 1 to 5, **characterized in that** only a maximum number of identification numbers (IN) is allocated for a predetermined time unit, wherein a threshold value is provided below this maximum number, the exceeding of which within the remaining time unit results in a time-delayed allocation of new identification numbers (IN).

7. Registration and transmitting unit (1) configured for carrying out the method according to one of claims 1 to 6 for electronically not recorded payment documents (7), **characterized in that** an input unit for inputting the purchase price (KP) as well as a stamping device for outputting the identification number (IN) on an inserted payment document (7) are provided.

## Revendications

1. Procédé pour l'enregistrement et la vérification de données concernant des transactions lors desquelles un prix d'achat (KP) est versé à un service de vente d'une entreprise commerciale (H) pour la réception d'une marchandise ou d'un service et un justificatif de paiement (7) est transmis et des données concernant au moins le lieu, l'heure et le prix d'achat d'une transaction sont transmis au niveau du service de vente par le service de vente à une unité d'enregistrement et d'émission (1) placée au service de vente, qui crée un protocole de transaction chiffré à l'aide d'une consigne de chiffrement (V) donnée par un service d'enregistrement externe (R) et identifiant l'unité d'enregistrement et d'émission (1), lequel protocole de transaction contient les données de lieu, de temps et de prix d'achat de la transaction, ainsi qu'un numéro d'identification (IN) sans équivoque contenant un numéro d'enregistrement pour l'unité d'enregistrement et d'émission (1) et un numéro de transaction pour la transaction, et l'unité d'enregistrement et d'émission (1) envoie le protocole de transaction à une mémoire de données (5) non accessible publiquement, qui est accessible à un service de vérification (P) à l'aide d'une consigne de déchiffrement (E) donnée par le service d'enregistrement (R) et transmise à l'entreprise commerciale (H) pour consulter le protocole de transaction, l'unité d'enregistrement et d'émission (1) envoyant le numéro d'identification (IN) à une imprimante à justificatifs de paiement ou à un dispositif de timbrage pour l'apposer sur le justificatif de paiement (7), **caractérisé en ce que** l'unité d'enregistrement et d'émission (1) crée à l'aide de la consigne de chiffrement (V) donnée par le service d'enregistrement (R) externe et identifiant l'unité d'enregistrement et d'émission (1), en plus du protocole de transaction chiffré, un protocole d'exploitation chiffré qui contient des données de fonctionnement de l'unité d'enregistrement et d'émission (1) à l'aide desquelles le bon fonctionnement de l'unité d'enregistrement et d'émission (1) peut être vérifié afin de constater des tentatives de manipulation de l'unité d'enregistrement et d'émission (1), et l'unité d'enregistrement et d'émission (1) envoie le protocole d'exploitation en plus du protocole de transaction chiffré à la mémoire de données (5) non accessible publiquement, qui est accessible au service de vérification (P) à l'aide d'une consigne de déchiffrement (E) donnée par le service d'enregistrement (R) et transmise à l'entreprise commerciale (H), et l'unité d'enregistrement et d'émission (1) envoie le numéro d'identification (IN) sous une forme chiffrée à l'aide du prix d'achat (KP) à une mémoire de données (6) accessible publiquement au moyen de la saisie d'un code d'accès, le numéro d'identification (IN) apposé sur le justificatif de paiement (7), associé au prix d'achat (KP), représentant le code d'accès.

2. Procédé selon la revendication 1, **caractérisé en ce que** l'unité d'enregistrement et d'émission (1) compare, avant chaque opération d'écriture sur le disque dur (3) de l'unité d'enregistrement et d'émission (1), la position d'écriture actuelle sur le disque dur (3) avec la position d'écriture choisie lors de l'opération d'écriture précédente de l'unité d'enregistrement et d'émission (1) et enregistre une position d'écriture différente dans le protocole d'exploitation.

3. Procédé selon la revendication 1 ou 2, **caractérisé en ce que** l'unité d'enregistrement et d'émission (1) compare l'évolution de l'indication d'heure avec les tics d'horloge de l'unité centrale de son unité de processeur et enregistre les écarts dans le protocole d'exploitation.

4. Procédé selon l'une des revendications 1 à 3, **caractérisé en ce que** l'unité d'enregistrement et d'émission (1) compare entre eux sa durée d'activation et le temps de fonctionnement du registre de son disque dur (3) lors de chaque démarrage de l'unité d'enregistrement et d'émission (1) et enregistre les écarts dans le protocole d'exploitation.

5. Procédé selon l'une des revendications 1 à 4, **caractérisé en ce que** l'unité d'enregistrement et d'émission (1) et la mémoire de données (5) non accessible publiquement détectent les coupures de la connexion de données de l'unité d'enregistrement et d'émission (1) avec la mémoire de données (5) non accessible publiquement et les enregistrent dans le protocole d'exploitation.

6. Procédé selon l'une des revendications 1 à 5, **caractérisé en ce que** seul un nombre maximal de numéros d'identification (IN) sont attribués pendant une unité de temps prédéterminée, une valeur de seuil inférieure à ce nombre maximal étant prévue, dont le dépassement pendant le restant de l'unité de temps entraîne un ralentissement de l'attribution de nouveaux numéros d'identification (IN).

7. Unité d'enregistrement et d'émission (1) configurée en vue de l'exécution du procédé selon l'une des revendications 1 à 6 pour des justificatifs de paiement (7) non saisis sous forme électronique, **caractérisée en ce que** sont prévues une unité de saisie du prix d'achat (KP), ainsi qu'un dispositif de timbrage pour apposer le numéro d'identification (IN) sur un justificatif de paiement (7) introduit.
